Europäisches Patentamt

European Patent Office

Office européen des brevets

(11) Veröffentlichungsnummer: **0 491 992 A1**

## (12) EUROPÄISCHE PATENTANMELDUNG

(21) Anmeldenummer: **90125632.1**

(22) Anmeldetag: **28.12.90**

(51) Int. Cl.5: **B08B 15/02**

(43) Veröffentlichungstag der Anmeldung:
**01.07.92 Patentblatt 92/27**

(84) Benannte Vertragsstaaten:
**AT BE CH DE DK ES FR GB GR IT LI LU NL SE**

(71) Anmelder: **Hohenleitner, Herbert**
**Jordanstrasse 10-12**
**W-8502 Zirndorf(DE)**

(72) Erfinder: **Hohenleitner, Herbert**
**Jordanstrasse 10-12**
**W-8502 Zirndorf(DE)**

(74) Vertreter: **Hafner, Dieter et al**
**Dipl.-Phys. Dr. D. Hafner - Dipl.-Ing. H. Stippl**
**Ostendstrasse 132**
**W-8500 Nürnberg 30(DE)**

(54) Verfahren zur Asbestentsorgung aus elektrischen Geräten, insbesondere Nachtspeicheröfen sowie Vorrichtung zur Durchführung des Verfahrens.

(57) Um ein Verfahren zur Asbestentsorgung aus in geschlossenen Räumen befindlichen oder befestigten elektrischen Geräten, wie beispielsweise Nachtspeicheröfen, mit vergleichsweise geringem Aufwand durchführen zu können und Gefährdungen für das Entsorgungspersonal als auch für die Bewohner des Raumes, in dem sich das zu entsorgende Gerät befindet, weitgehendst auszuschließen, wird verfahrensgemäß das asbestkontaminierte Gerät auf einem beweglichen Grundelement (2) abgesetzt und das Gerät aus seiner ehemaligen ggf. wandnahen Montageposition entfernt, so dann wird das Gerät durch eine zumindest teiltransparente Haube (4) eingeschlossen, die über das Gerät auf das Grundelement (2) gestülpt wird und die Vorrichtungen zur Manipulation (16) von Gegenständen innerhalb der Haube (4) aufweist, so dann wird in der Haube (4) Unterdruck erzeugt, das asbestkontaminierte Gerät in einzeln handhabbare Teile innerhalb der Haube (4) demontiert, die demontierten asbestkontaminierten Geräteteile werden innerhalb der Haube (4) in vakuumdichte Hüllen (22) eingepackt und nach Ausschleußung aus der Haube (4) zu einer Endlagestätte für Asbestmaterialien gebracht. Ferner betrifft die Anmeldung eine vorteilhafte Vorrichtung zur Durchführung des Verfahrens.

FIG.1

Die Erfindung betrifft ein Verfahren zur Asbestentsorgung aus elektrischen Geräten, insbesondere aus Nachtspeicheröfen sowie eine Vorrichtung zur Durchführung des Verfahrens.

Stand der Technik, Problemstellung;

In fast nahezu allen elektrischen Geräten mit einer Heizeinrichtung, insbesondere in Nachtspreicheröfen, die ein Herstellungsdatum vor 1976 tragen, wurden asbesthaltige Materialien in Form von Isoliermatten, Dichtungsschnüren, Asbestkeramikeinsetzen, Bodenplatten etc. eingebaut. In derartigen Materialien sind die Asbestfasern, deren gesundheitsgefährdendes Potential in den letzten Jahren erkannt wurde, ursprünglich mehr oder weniger fest gebunden gewesen. Jedoch führen Alterungsprozesse und mechanische Einwirkungen auf die asbesthaltigen Materialien zu einer wachsenden Freisetzung der Fasern. Die Fasern lagern sich in den Geräten ab und können aus den Geräten ins Freie, d.h. in einen Wohnbereich gelangen, wo sie als lungengängige Fasern bei den Bewohnern der Räume die sog. Asbestosekrankheit hervorrufen können, die nach derzeitiger medizinischer Erkenntnis mit hoher Wahrscheinlichkeit zum Tode führt.

Wenn von elektrischen Geräten allgemeiner Art gesprochen wird, so sind damit insbesondere Geräte gemeint, die nicht ohne weiteres als solche abtransportiert werden können, wie z.B. Nachtspeicheröfen, Heizkessel, Elektroboiler, Klimatisierungs- und Kühlgeräte, mithin alle schwergewichtigen und nicht ohne weiteres in montierten Zustand über Treppenhäuser und dergleichen transportable Geräte. Insbesondere bei Nachtspeicheröfen erfolgt ein Zusammenbau von neuen Öfen dadurch, daß die sehr schwergewichtigen und voluminösen Speichersteine einzeln an den Montageort gebracht werden und dort in eine Aufnahme im Ofeninneren eingesetzt werden, der einmal fertiggestellte Ofen ist in montiertem Zustand nicht abtransportierbar und müßte beispielsweise mit einem Kran oder dergleichen aus einem Fenster eines Gebäudes geholt werden, ein Verfahren, das in der Regel nicht durchführbar ist.

Man ist deswegen mehr oder weniger gezwungen, bei der Entsorgung derartiger Geräte das Gerät vorort, d.h. im Wohnbereich zu zerlegen und die kontaminierten Stücke einzeln abzutransportieren. Es ist nur allzu einsichtig, daß gerade bei einem solchen Demontagevorgang zusätzlich zu den durch Alterungsprozesse bereits freigewordenen Asbestfasern weitere Fasern freigesetzt werden, die dann das Umfeld des Montageortes kontaminieren können.

Im Stand der Technik sind zur Zeit zwei Vorgehensweisen üblich, zum einen werden die Geräte - so gut es geht - eingepackt und abgeklebt und von einer Fachfirma abtransportiert. In einer Unterdruckkammer mit angeschlossener Personal- und Materialschleuße werden die Geräte dann demontiert. Das asbesthaltige und kontaminierte Material wird einer Sondermülldeponie zugeführt, das übrige Material wird restfasergebunden und einer Bauschuttdeponie zugeführt. Eine derartige Vorgehensweise ist natürlich nur dort durchführbar, wo Bodenmaximalbelastungen von Gebäudedecken sowie Treppenhäuser und dergleichen den Abtransport von relativ großvolumigen und schwergewichtigen Öfen oder sonstigen Geräten erlauben.

Ist dies nicht der Fall, so wird eine andere Vorgehensvariante eingesetzt, nämlich die Demontage der Geräte vor Ort, wobei dann der Wohnbereich völlig ausgeräumt werden muß und mit dem enormen Aufwand einer Asbestsanierungsbaustelleneinrichtung (Schleußenkammer, Unterdruckkammer, Freimessung etc.) versehen werden muß. Die Entsorgung erfolgt wie oben beschrieben. Diese zweite beschriebene Vorgehensweise ist derart aufwendig, so daß in vielen Fällen von einer Asbestsanierung abgesehen und das sich im Laufe der Zeit steigernde Gefährdungspotential bewußt hingenommen wird, wodurch enorme Gesundheitsschädigungen entstehen können.

Aufgabenstellung, Lösung;

Der Erfindung liegt die Aufgabe zugrunde, zunächst ein Asbestentsorgungsverfahren anzugeben, das mit vergleichsweise geringerem Aufwand durchführbar ist und sowohl für das Entsorgungspersonal als auch für die Bewohner des Raumes, in dem sich das zu entsorgende Gerät befindet, keinerlei Gefährdung aufweist. Diese Aufgabe wird durch die Merkmalskombination des Verfahrensanspruches 1 gelöst.

Weiterhin liegt der Erfindung die Aufgabe zugrunde, eine Vorrichtung zur Entsorgung von asbestkontaminierten Gegenständen, insbesondere von Nachtspeicheröfen aus Wohnräumen und dergleichen anzugeben, die aufgrund ihrer apparativen Komponente leicht handhabbar ist und eine Asbestfaserfreisetzung in das Demotageumfeld verhindert.

Diese Aufgabe wird durch die Merkmale des Anspruches 9 gelöst.

Vorteilhafte Weiterbildungen des Verfahrens sowie der Vorrichtung ergeben sich aus den zu den bei nebengeordneten Hauptansprüchen zugehörigen Unteransprüchen.

Als Kern der Erfindung im Hinblick auf das Entsorgungsverfahren wird es zunächst angesehen, um das zu entsorgende Gerät einen kleinvolumigen abgeschlossenen "Schwarzbereich" zu schaffen, in dem das Gerät zerlegt werden kann und aus dem die demontierten Gerätebruchstücke gefahrlos herausgebracht und entsorgt werden können.

Weiterhin ist es notwendig, auch schwergewichtige Geräte in eine Position zu bringen, in der sie von allen Seiten her begehbar sind, um einen möglichst raschen Montagevorgang vornehmen zu können. Dazu ist ein bewegliches Grundelement beispielsweise in Form eines Hubwagens vorgesehen. Ein Hubwagen kann z.B. problemlos unter einen zu demontierenden Speicherheizkörper gefahren werden und sehr sachte angehoben werden, so daß keine ruckartigen oder schlagartigen Bewegungen mit dem zu entsorgenden Gerät ausgeführt werden, die ungewollt zu einer Freisetzung von Asbestfasern führen könnten, die sich bereits im Innenraum des Gerätes lose abgelagert haben.

Die Demontage des Gerätes geschieht quasi nach dem "Käseglockenprinzip" wobei Manipulatoren beispielsweise in Form von langen Gummihandschuhen dem Entsorgungspersonal einen Eingriff in die Haube gewährleisten. Innerhalb der Haube ist das notwendige Demontagewerkzeug vorgesehen. Um die demontierten Teile aus dem Haubenbereich hinauszubringen, ist eine Schleuße vorgesehen, die konstruktiv so ausgebildet ist, daß bei einem Schleußenvorgang keine Asbestfasern auf die Hochdruckseite der Schleuße kommen. Gezielte Luftströmungsführungen innerhalb der Schleuße sind hier ein geeignetes Mittel, um Asbestfasern daran zu hindern, beim Schleußenvorgang freigesetzt zu werden.

Besonders vorteilhaft ist es, wenn die Geräteteile zum Zwecke der asbestdichten Verpackung durch eine Haubenöffnung in einen einseitig abgeschlossenen, die Transporthülle bildenden Folienschlauch verbracht werden. Der Folienschlauch kann beispielsweise auf einen nach außen gerichteten die Haubenöffnung umgebenden Rohrstutzen aufgekrempelt sein und von dem Rohrfortsatz bedarfsweise abgezogen werden, so daß das abgeschweißte Ende des Folienschlauches quasi die Vakuumdichtung bildet. Besonders vorteilhaft wirkt sich die Tatsache aus, daß sich die Folie aufgrund des bestehenden Unterdruckes sehr eng um das einzupackende Teil herumlegt und beim Verbringen dieses Päckchens auf eine Deponie nicht zu befürchten ist, daß aufgrund von Luftanteilen in der Hülle die Hülle zerdrückt wird.

Ist der Demontagevorgang weitgehend abgeschlossen, so lassen sich kleinere Rückstände und beim Montagevorgang freigesetzte Asbestfasern durch eine Saugvorrichtung aufnehmen und in einen Sonderbehälter abziehen, was beispielsweise durch den Sauganatz der unterdruckhaltenden Vorrichtung geschehen kann, der nach Art eines Staubsaugers ausgebildet ist. Nach dem Demontagevorgang kann der Innenbereich der Haube durch ein Restfaserbindemittel besprüht werden, das Restfaserbindemittel bildet eine die Asbestfasern bindende Schicht, die nach Öffnen der Haube ohne die Gefahr einer Faserfreisetzung abgelöst und abgezogen werden kann.

Vorteilhaft kann es sich auch auswirken, wenn die Größe der Haube durch Ausziehen eines Haubenteils an die jeweilige Größe des zu entsorgenden Gerätes anpaßbar ist. Damit kann ein und dieselbe Vorrichtung auch in engeren Räumen, in denen sich beispielsweise kleinere Wärmespeieröfen befinden eingesetzt werden.

Um völlig sicher zu gehen, daß auch beim Absetzvorgang keine Faserfreisetzung in das Demontageumfeld erfolgt, ist es möglich, das in Folie gepackte und abgeklebte Gerät beim Aufsetzvorgang auf die Grundplatte mit Unterdruck zu beaufschlagen. Die Unterdruckbeaufschlagung kann über die gleiche Saugvorrichtung erfolgen, die nachfolgend zur Unterdruckhaltung dient.

Die Vorrichtung zur Entsorgung von asbestkontaminierten Gegenständen weist eine roll- oder gleitbare Grundplatte auf, auf die der zu entsorgende Gegenstand, z.B. der Nachtspeicherofen abgesetzt wird. Die Haube, die nachfolgend über das zu entsorgende Gerät gestülpt wird und quasi zusammen mit der Grundplatte den Schwarzbereich definiert sollte teiltransparent sein, d.h. dem Entsorgungspersonal zumindest soviel Einblickmöglichkeit bieten, daß ein Entsorgungsvorgang ungefährlich, gezielt und rasch innerhalb der Haube durchgeführt werden kann. Welcher Art die Einblickmöglichkeiten sind, ist von untergeordneter Bedeutung, vorzugsweise besteht die Haube jedoch aus Acrylglasmaterial und ist insgesamt transparent.

An die Haube ist eine unterdruckhaltende Vorrichtung anschließbar. Wenn hier von Unterdruck gesprochen wird, so reichen relativ geringe Unterdrücke aus, um zu vermeiden, daß durch Ritzen zwischen Haube und Bodenplatte Asbestfasern freigesetzt werden. Darüber hinaus wird durch Unterdruckbeaufschlagung des Haubeninnenraumes ein festes Anpressen der Haube auf die Bodenplatte gewährleistet. Durch Gummidichtungen im Fugenbereich läßt sich hier eine völlig ausreichende Abdichtung erreichen.

Die Haube weist Manipulatoren auf, die vorstehend bereits erwähnt wurden. Wenn hier von Manipulatoren gesprochen ist, so müssen dies nicht die oben erwähnten Gummihandschuhe sein, die mit ihrem Schlupfende in der Haubenmandlung befestigt sind und somit einen Eingriff von außen ermöglichen; auch Greifer, Zangen, von außen betätigbare Sägen und dergleichen sind denkbar, jedoch unter Umständen nicht so ergonomisch wie die vorerwähnten Gummihandschuhe.

Besonders vorteilhaft ist es, wenn die Entnahmeöffnung mit einem Rohrabschnitt an ihrem Rand versehen ist, auf den ein Folienschlauch aufgekrempelt werden kann und bedarfsweise abgezogen werden kann. Am Ende des rohrförmigen Abschnittes ist dann eine Folienschweißvorrichtung vorgesehen, deren Heizelemente bzw. Schweißlippen so breit ausgebildet sind, daß sich eine Schweißnaht mit relativ hoher Breite ergibt, die mittig durchgeschnitten werden kann, so daß an den gebildeten Päckchen eine vakuumdichte Teilschweißnaht verbleibt und der Folienschlauchendabschnitt ebenfalls wieder vakuumdicht ist.

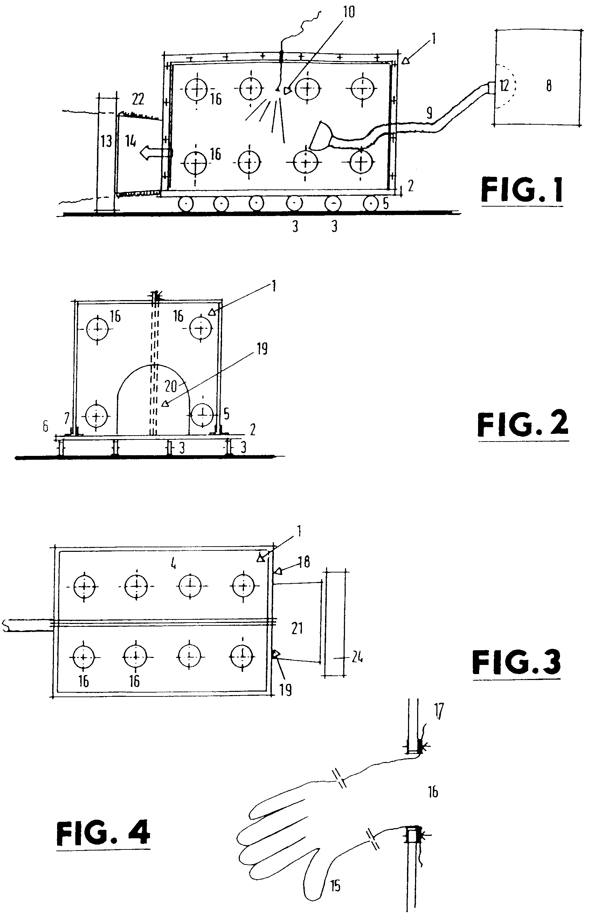

Die Erfindung ist anhand eines Ausführungsbeispieles in den Zeichnungen näher erläutert. Diese Zeichenfiguren 1-3 zeigen 3 Ansichten der Vorrichtung sowie Figur 4 eine Detailansicht der Vorrichtung.

Die Vorrichtung zur Entsorgung von asbestkontaminierten Gegenständen, insbesondere von Nachtspeicheröfen aus Wohnräumen und dergleichen weist zunächst eine Entsorgungszelle auf, die in Zeichnungsfigur 1 mit ihrer Breitseite, in Zeichnungsfigur 2 mit ihrer Schmalseite und in Zeichnungsfigur 3 von oben dargestellt ist. Die Entsorgungszelle besteht aus einer rollbaren Grundplatte (2) mit einer Mehrzahl von Rollen (3) auf die der zu entsorgende Gegenstand, z.B. ein Nachtspeicherofen abgesetzt werden kann. Auf der Grundplatte (2) sitzt eine Haube (4), die mit ihrem unteren Rand (5) dichtend auf der Oberseite (6) der Grundplatte (2) aufliegt. Zur ausreichenden Abdichtung für die Aufrechterhaltung eines Unterdruckes ist ein Dichtelement (7) zwischen Haube (4) und der Oberseite (6) der Grundplatte (2) angeordnet.

Mit (8) ist eine unterdruckhaltende Vorrichtung bezeichnet, die über einen Saugschlauch (9) mit dem Innenraum (10) der Haube in Verbindung steht. Das innere Ende (11) des Saugschlauches (9) ist nach Art einer Saugdüse ausgebildet, um feine Asbestrückstände vom Boden der Entsorgungszelle (1) abzusaugen und in einen Sonderbehälter (12) zu verbringen.

Schließlich ist noch eine mit der Haube in Verbindung stehende Ausschleuß- und Verpakkungsvorrichtung (13) vorgesehen, durch die in Pfeilrichtung (14) asbestkontaminierte Einzelteile entfernt werden können.

Die Haube besteht vorzugsweise aus Acrylglasmaterial und ist somit vollständig transparent.

Ferner sind in der Haubenwandung eine Vielzahl von Manipulatoren angeordnet, so daß der zu entsorgende Gegenstand im Haubeninneren durch eine Bedienungsperson außerhalb der Haube demontierbar ist. Die Manipulatoren bestehen beim Ausführungsbeispiel aus flexiblen Handschuhen (15), die mit ihren offenen Enden (16) in der Haubenwandung (17) befestigt sind, wie dies in Figur 4 im einzelnen dargestellt ist. Die Handschuhe (15) sind mindestens unterarmlang, so daß die Bedienungsperson genügend Bewegungsfreiheit im inneren der Haube hat.

Die Haube kann auch durch mehrere Haubenteile gebildet werden, wobei der eine Haubenteil den anderen Haubenteil übergreift und im Überdekkungsbereich eine Dichtvorrichtung vorgesehen sein kann. Dadurch ist die Haube quasi ausziehbar und an die Größe der zu entsorgenden Gegenstände anpaßbar.

Die Grundplatte (2) mit der Vielzahl von Rollen (3) ist nach Art eines Hubwagens ausgebildet und kann beispielsweise eine pneumatische, hydraulische oder elektrische Hubvorrichtung aufweisen, die im einzelnen nicht näher dargestellt ist. Derartige Hubwagen sind im Prinzip bekannt und werden zum Aufnehmen und Absetzen von schweren Gegenständen wie Paletten, Kraftfahrzeugen und dergleichen verwendet. Eine ähnliche Konstruktion kommt hier in Frage.

Eine Schmalseite (18) der Haube (4) ist mit einer Entnahmeöffnung (19) versehen, an deren Rand (20) ein Rohrabschnitt (21) angeordnet ist, auf den ein Folienschlauch (22) aufgesteckt und mit seinem haubennahen Ende abgedichtet ist. Am Ende (23) des Rohrabschnittes (21) ist eine Folienschweißvorrichtung (24) angeordnet, wie sie zum Verschweißen von Beuteln bekannt ist. Das freie Ende des Folienschlauches (22) ist zugeschweißt, so daß der Folienschlauch die Entnahmeöffnung (19) abdichtet. Soll nun ein kontaminiertes Bruchstück des zu entsorgenden Gegenstandes ausgeschleußt werden, so wird es in den Tunnel gereicht, von außen mit der Folie gegriffen und ein Stück Folie vom Rohrabschnitt (21) abgezogen, was gegen den Widerstand des Unterdruckes zu erfolgen hat, da der Unterdruck aber nur relativ gering ist, grundsätzlich möglich ist. Sobald das Bruchstück bis Jenseits (in Zeichnungsfigur 1 links) von der Folienschweißvorrichtung (24) ist, wird der das Bruchstück enthaltende Folienschlauchabschnitt verschweißt. Da die Schweißnaht relativ breit ist, kann sie in zwei Teilschweißnähte mittig durchgeschnitten werden, wodurch das aus Folienschlauch und Haube gebildetes System insgesamt dicht bleibt, das Bruchstück aber ausgeschleußt ist.

In der Deckfläche (25) weist die Haube (4) noch eine Vorrichtung (26) zum Einsprühen eines Restfaserbindemittels auf.

**Patentansprüche**

1. Verfahren zur Asbestentsorgung aus in geschlossenen Räumen befindlichen oder befestigten elektrischen Geräten, insbesondere Nachtspeicheröfen, mit den Verfahrensschritten:

    a) Absetzen des asbestkontaminierten Gerätes auf einem beweglichen Grundelement (Grundplatte), gegebenenfalls Entfernen des Gerätes aus seiner ehemaligen wandnahen Montageposition;

b) Einschließen des Gerätes durch eine zumindenst teiltransparente Haube, die über das Gerät auf das Grundelement gestülpt wird und die Vorrichtungen zur Manipulation von Gegenständen innerhalb der Haube aufweist;

c) Erzeugung von Unterdruck in der Haube durch eine Saugvorrichtung;

d) Demontage des asbestkontaminierten Gerätes in einzeln handhabbare Teile innerhalb der Haube;

e) Verpacken der demontierten asbestkontaminierten Geräteteile innerhalb des Unterdruckbereiches in vakuumdichte Hüllen;

f) Abtransport der in Hüllen befindlichen Geräteteile zur Lagerstätte.

2. Verfahren nach Anspruch 1

    dadurch gekennzeichnet,

daß das Gerät vor dem Absetzen auf das Grundelement in Folie eingepackt und abgeklebt wird.

3. Verfahren nach einem der vorhergehenden Ansprüche

    dadurch gekennzeichnet,

daß die Hüllen zur Aufnahme der asbestkontaminierten Geräteeinzelteile außerhalb der Haube angeordnet sind und über eine Schleuße mit dem Unterdruckbereich innerhalb der Haube in Verbindung stehen.

4. Verfahren nach einem der vorhergehenden Ansprüche

    dadurch gekennzeichnet,

daß die Geräteteile zum Zwecke der asbestdichten Verpackung durch eine Haubenöffnung in einen endseitig abgeschlossenen, die Hülle bildenden Folienschlauch verbracht werden, der Folienschlauch zwischen der Haube und dem Geräteteil mit einer vakuumdichten Schweißnaht versehen wird und schließlich von dem an der Haube verbleibenden Folienschlauchteil innerhalb der Schweißnaht abgeschnitten wird.

5. Verfahren nach einem der vorhergehenden Ansprüche

    dadurch gekennzeichnet,

daß der Folienschlauchabschnitt gegen die Kraft des Unterdrucks abgestützt ist.

6. Verfahren nach einem der vorhergehenden Ansprüche

    dadurch gekennzeichnet,

daß nach dem Demontagevorgang der Innenbereich der Haube durch ein Restfaserbindemittel beaufschlagt wird.

7. Verfahren nach einem der vorhergehenden Ansprüche

    dadurch gekennzeichnet,

daß die Größe der Haube durch Ausziehen eines Haubenteiles an die jeweilige Größe des zu entsorgenden Gegenstandes anpaßbar ist.

8. Verfahren nach Anspruch 2,

    dadurch gekennzeichnet,

daß das in Folie gepackte und abgeklebte Gerät beim Absetzvorgang auf die Grundplatte mit Unterdruck beaufschlagt wird, wobei der Unterdruck über eine mit einer Filtervorrichtung versehene Saugvorrichtung erzeugt wird.

9. Vorrichtung zur Entsorgung von asbestkontaminierten Gegenständen, insbesondere Nachtspeicheröfen aus Wohnräumen und dergleichen,

    gekennzeichnet durch
- eine roll- oder gleitbare Grundplatte (2), auf die der zu entsorgende Gegenstand, z.B. Nachtspeicherofen absetzbar ist,
- eine zumindest teiltransparente Haube (4), die über den zu entsorgenden Gegenstand auf die Grundplatte (2) setzbar ist,
- eine unterdruckhaltende Vorrichtung (8), die an die Haube (4) oder die Grundplatte (2) anschließbar ist,
- Manipulatoren an der Haube (4) derart, daß der zu entsorgende Gegenstand im Haubeninneren durch eine Bedienungsperson außerhalb der Haube demontierbar ist,
- eine mit der Haube in Verbindung stehende Ausschleuß- und Verpackungsvorrichtung (13) für aus der Haube (4) zu entfernende asbestkontaminierte Einzelteile.

**10.** Vorrichtung nach Anspruch 9,

dadurch gekennzeichnet,

daß die Haube (4) aus Acrylglasmaterial besteht.

**11.** Vorrichtung nach Anspruch 10,

dadurch gekennzeichnet,

daß die Manipulatoren durch mit ihren offenen Enden (16) vakuumdicht in der Haubenwandung (17) befestigte Handschuhe (15) gebildet werden.

**12.** Vorrichtung nach Anspruch 11,

dadurch gekennzeichnet,

daß die Handschuhe (15) mindestens unterarmlang sind.

**13.** Vorrichtung nach Anspruch 12,

dadurch gekennzeichnet,

daß innerhalb des Haubenbereiches eine Absaugvorrichtung (11) zur Absaugung von Kleinteilen in einen Sonderbehälter (12) vorgesehen ist.

**14.** Vorrichtung nach Anspruch 13,

dadurch gekennzeichnet,

daß die Absaugeinrichtung mit der unterdruckhaltenden Vorrichtung (8) verbunden ist oder durch den Ansaugstutzen der unterdruckhaltenden Vorrichtung (8) gebildet wird.

**15.** Vorrichtung nach Anspruch 14,

dadurch gekennzeichnet,

daß die Haube aus mehreren, gegeneinander ausziehbaren Haubenteilen besteht, die über ein flexibles Element vakuumdicht miteinander verbunden sind.

**16.** Vorrichtung nach Anspruch 15,

dadurch gekennzeichnet,

daß die Grundplatte (2) nach Art eines Hubwagens ausgebildet ist.

**17.** Vorrichtung nach Anspruch 16,

dadurch gekennzeichnet,

daß die Haube (4) mit einer Entnahmeöffnung (19) versehen ist, an deren Rand (20) ein Rohrabschnitt (21) angeordnet ist, auf den ein Folienschlauch (22) aufgesteckt und mit seinem haubennahen Ende abgedichtet ist.

**18.** Vorrichtung nach Anspruch 17,

dadurch gekennzeichnet,

daß am äußeren Ende (23) des Rohrabschnittes (21) eine Folienschweißvorrichtung (24) angeordnet ist.

**19.** Vorrichtung nach Anspruch 18,

dadurch gekennzeichnet,

daß die Heizelemente der Folienschweißvorrichtung (24) eine derartige Breite aufweisen, daß die durch sie gebildete Schweißnaht unter Beibehaltung einer vakuumdichten Teilschweißnaht mittig trennbar ist.

**20.** Vorrichtung nach Anspruch 19,

dadurch gekennzeichnet,

daß die Haube (4) mit einer Vorrichtung (26) zur Einbringung eines Restfaserbindemittels versehen ist.

**FIG.1**

**FIG.2**

**FIG.3**

**FIG. 4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 817 644 (HOLMES) <br> * The whole document * | 1,3,4,6,8,9,11,12,17,20 | B 08 B 15/02 |
| A | EP-A-0 347 075 (TEKTRONIX INC.) <br> * Abstract; figures 1-12 * | 1,3,8,9,16 | |
| A | NTIS TECH NOTES, September 1989, page 747, Springfield, VA, US; "Inspection in overhead spaces containing asbestos" | 2,11,12 | |
| A | US-A-4 765 352 (STRIETER) <br> * Columns 3-6; figures 1-2 * | 1,5,8,9,17 | |
| A | EP-A-0 130 747 (PITMAN) <br> * Page 6, lines 10-35; figures 1-4 * | 13,14 | |
| A | WO-A-9 006 190 (G. GWILLIAM) <br> * Page 6, lines 22-28; figures 1-4 * | 15 | |

TECHNICAL FIELDS SEARCHED (Int. Cl.5)

B 08 B

The present search report has been drawn up for all claims

| Place of search | Date of completion of the search | Examiner |
|---|---|---|
| THE HAGUE | 04-09-1991 | VOLLERING J.P.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)